# EUROPEAN PATENT SPECIFICATION

(11) **EP 3 954 070 B1**
(45) Date of publication and mention of the grant of the patent: **20.08.2025**
(21) Application number: 20719235.2
(22) Date of filing: 09.04.2020
(51) Int. Cl.: H04B 10/61, H04J 14/06

(54) **OPTICAL TRANSMISSION SYSTEM, OPTICAL RECEIVER AND METHOD OF COMBINING AND RECEIVING AN OPTICAL SIGNAL**
OPTISCHES ÜBERTRAGUNGSSYSTEM, OPTISCHER EMPFÄNGER UND VERFAHREN ZUM KOMBINIEREN UND EMPFANGEN EINES OPTISCHEN SIGNALS
SYSTÈME DE TRANSMISSION OPTIQUE, RÉCEPTEUR OPTIQUE ET PROCÉDÉ DE COMBINAISON ET DE RÉCEPTION D'UN SIGNAL OPTIQUE

(30) Priority: 09.04.2019 US 201962831255 P
(43) Date of publication of application: 16.02.2022
(73) Proprietor: Bifrost Communications ApS, Kongens Lyngby (DK)
(72) Inventor: PETERSEN, Bo, 2800 Kongens Lyngby (DK); JENSEN, Jesper, 2800 Kongens Lyngby (DK)
(74) Representative: Haines, Miles John L.S.
(86) International application number: PCT/IB2020/053417
(87) International publication number: WO 2020/208581

(56) References cited:
- WO-A1-2014/146236
- CN-A- 105 005 150
- CN-A- 105 005 151
- CN-A- 105 068 257
- US-A- 5 003 625

## Description

### BACKGROUND OF THE INVENTION

### Field of the Invention

The present invention generally relates to optical systems with improved performance. More specifically, the invention relates to optical transmission systems, receivers, devices, and methods that enable quasi-coherent and coherent detection of optical signals using compact optical devices.

### Background Art

Continuing advances in the communications technology and the seemingly insatiable appetite of consumers for services that require more and more bandwidth continue to drive communication service providers to demand that communication equipment companies deliver higher performance, higher bandwidth equipment that occupies less physical space than existing equipment.

All indications are the demand for higher performance, smaller footprint equipment to deliver customer services will not dissipate any time soon, so there remains a continuing need for optical communications systems and devices with higher performance, smaller footprint, and lower cost.

US5003625A discloses a receiver device for receiving as inputs a first beam carrying an optical signal and a second beam carrying a local oscillator. The device mixes the first and second beams into two oppositely phased combined beams and then splits each combined beam into a pair of orthogonally polarized beams that are output. CN105005151A discloses a receiver device for receiving as inputs a first beam carrying an optical signal and a second beam carrying a local oscillator. The device mixes the first and second beams into two combined beams and then splits each combined beam into a pair of orthogonally polarized beams that are output.

### BRIEF SUMMARY OF THE INVENTION

The present invention addresses the above noted needs and problems by providing optical communication systems, receivers, and methods of receiving according to the claims that involve compact assemblies, such as optical and electrical subassemblies, for quasi-coherent and coherent optical receivers and systems.

Optical systems of the present invention include optical receivers that includes
- an optical signal input to receive an optical signal
- a local oscillator input to receive local oscillator light from one or more local oscillators;
- a free space beam combining and polarization splitting prism to receive the local oscillator light and optical signal in substantially parallel input paths that are in the same plane and output two orthogonally polarized beams in substantially parallel output paths that are substantially perpendicular to the plane of the input paths, both beams including at least a portion of the local oscillator light and at least one of the beams including optical signal;
- two or more opto-electrical converters, each one positioned to receive a different one of the orthogonally polarized beams from the prism output path.

In various embodiments, a beam collimator and lens may be employed to collimate the local oscillator light and provide a collimated beam to the prism. Also, lens may also be provided for each orthogonally polarized beam to focus orthogonally polarized beam on the respective opto-electrical converters.

The prism may be generally designed to reflect one of the incoming paths toward a combining surface that combines the local oscillator light and the optical signal. The combined beam then encounters a polarization splitting surface that splits/separates the combined beam into two orthogonally polarized beams. One of the polarized beam may be reflected 90 degrees in plane and then both orthogonally polarized beams are reflected 90 degrees of out of plane to output each orthogonally polarized beam into substantially parallel optical output paths.

The alignment of the optical components as described above enables a very small form factor for devices of the present invention due to the optical processing of the local oscillator light and optical signal in one plane from one direction and the electrical processing of the signals in a substantially parallel plane and in one direction. In various embodiments, the optical processing and the electrical processing generally proceed in the same direction, but in different planes.

Accordingly, the present disclosure addresses the continuing need for systems and receivers with improved cost and performance.

### BRIEF DESCRIPTION OF THE DRAWINGS

The accompanying drawings are included for the purpose of exemplary illustration of various aspects of the present invention, and not for purposes of limiting the invention, wherein:
FIGS. 1 & 2 show exemplary optical systems embodiments.
FIG. 3 shows exemplary optical line terminal/regenerator embodiments.
FIGS. 4 and 5A-5C show exemplary optical receiver embodiments.
FIG. 6 shows a cross-sectional view of exemplary free space prism embodiments, such as shown in FIGS. 5A-5C.

In the drawings and detailed description, the same or similar reference numbers may identify the same or similar elements. It will be appreciated that the implementations, features, etc. described with respect to embodiments in specific figures may be implemented with respect to other embodiments in other figures, unless expressly stated, or otherwise not possible.

### DETAILED DESCRIPTION OF THE INVENTION

Optical systems 10 of the present invention may be employed in various known configurations in uni- or bi-directional systems that may be point or multi-point to point or multi-point configurations with nodes deployed in linear, ring, mesh, and other network topologies and managed via local and/or network management systems. In general, the system 10 may be deployed using free space and/or optical fiber, but it may be appreciated that many of the applications may involve fiber optic-based system. See, for example, PCT Application No. PCTIB2018000360 (WO2018172847).

Furthermore, the optical system 10 may generally support one or more wavelength channels that may be laid out in a channel grid over various ranges in the optical spectrum. For example, single channel system may be operated with a wavelength channel around 1310 nm and/or 1550 nm. While dense wavelength division multiplexed (DWDM) systems, for example, may divide the optical spectrum ranging nominally from 1490-1625 nm (S-band, C-band, L-band) into dozens of wavelength channels having a fixed or variable bandwidths, such as 50 GHz, 100 GHz, etc., depending upon the design and application of the system 10. For example, the system may be defined with wavelength channels based on the ITU grid, https://www.itu.int/itu-t/recommendations/rec.aspx?rec=11482. Optical signals may be transmitted through the system 10 at wavelengths that fall within one of the wavelength channel. While the channel grid may be continuous with adjacent channels sharing a channel edge, the system 10 may provide a guard band near the channel edge. The guard band is a wavelength range that is adjacent to the channel edge in which optical signals should not be transmitted used to reduce the amount of interference between signals in adjacent channels.

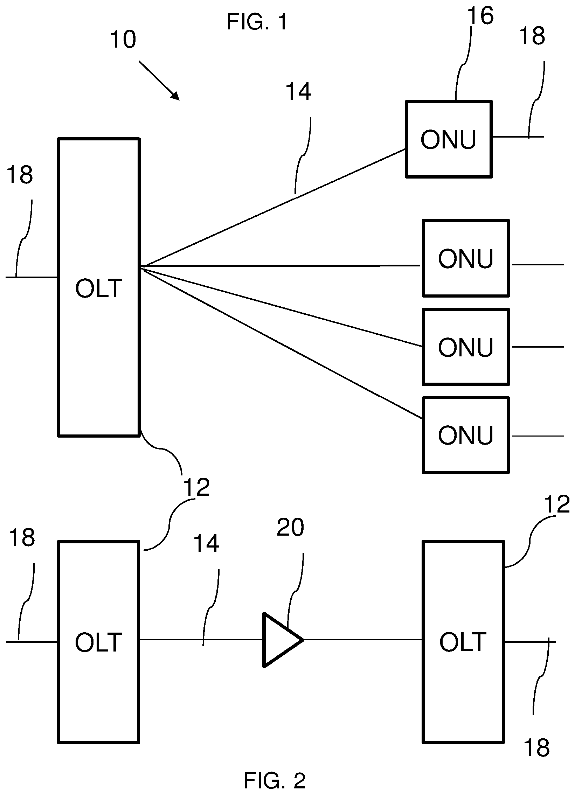

FIGS 1 & 2 depict exemplary embodiments of optical system 10 in point to multi-point links (1) and point to point links (2) between nodes. The links may be stand-alone optical communication links or may be part of a passive optical network ("PON") or a network as described in the preceding paragraph that may include passive and active optical switches (OS) and add/drop multiplexers (OADM), optical amplifiers (OA), etc.

In FIG. 1, exemplary optical system 10 embodiments may include an optical line terminal or regenerator (OLT) 12. The OLT 12 may be in uni- or bi-directional optical communication via one or more optical fibers 14 with one or more optical network units (ONU) 16. The OLTs 12 and ONUs 16 may be connected to one or more input/output lines 18, which may be optical and/or electrical depending upon the network implementation.

FIG. 2 shows exemplary optical system 10 embodiments including a point to point link between two OLTs 12. FIG. 1 and 2 embodiments may or may not include optical amplifiers 20 depending upon the network configuration.

FIG. 1 and 2 embodiments may be deployed in various layers in the network including the metro and access layers of the network. In the access networks including fronthaul, backhaul and aggregation, the system 10 may be operated as a PON or may include line amplifiers 20 to provide amplification between the nodes and other active equipment at or between the nodes.

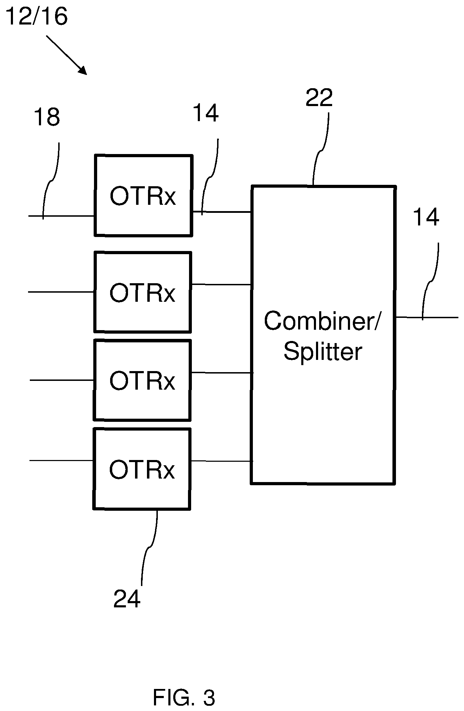

FIG. 3 shows exemplary OLT 12 and ONU 16 node embodiments that may include an optical combiner/splitter 22 that may combine and/or split optical signals when more than one transmitter or receiver, (OTRx) 24 is used in the system 10.

The optical combiner/splitter 22 may include passive couplers and wavelength specific multiplexers and demultiplexers depending upon whether the optical system is deployed as a single wavelength and/or wavelength division multiplexed system. For example, the optical system 10 may be deployed as a time division multiplexed ("TDM"), wavelength division multiplexed ("WDM"), or time & wavelength division multiplexed ("TWDM") system in which each ONU 16 communicating with the OLT 12 may use the same or different wavelengths as will be further described herein. It will be appreciated that if a node in the system is only transmitting and/or receiving one channel and only one channel is present on the fiber or free space link 14 connecting the nodes, then optical combiner/splitter 22 may be used in the nodes.

The transmitters or receivers (OTRx) 24 may include only transmitters or receivers, separate transmitters and receivers, or transceivers depending up the system configuration. In various embodiments, it may be cost effective to employ integrated transceivers to reduce cost, but in other embodiments it may be more desirable to employ separate transmitters and receivers, as well as to merely provide for uni-directional communication.

The optical transmitter in the OTRx 24 generally include one or more fixed or tunable wavelength optical sources, such as narrow or broad line width lasers. Information in one or more information streams may be imparted to the light, i.e., optical carrier, emitted by the source directly modulating the source, modulating the light using an external modulator, and/or upconverting electrical carriers carrying the information to producing the optical signal carrying the information on one or more wavelengths/frequencies.

The information may be imparted using one or more modulation techniques including amplitude modulation (AM), frequency modulation (FM), phase modulation (PM), etc. or combinations thereof. In addition, the information may be imparted in analog or digital format employing various modulation formats that support two or more modulation levels, e.g., "0"-states and "1" states, RZ, NRZ, etc. Advanced/higher-order/multilevel modulation formats, such as duobinary and other higher order constellations, may be used to enable more bits of information per symbol transmitted, or to allow for the use of components with a bandwidth smaller than the equivalent binary signal bandwidth. For example, a system employing four amplitude levels will be able to encode two bits per symbol, a system employing four frequency levels will be able to encode two bits per symbol, a system which independently employs four amplitude and four frequency levels will be able to encode four bits per symbol, and a duobinary or higher order other partial response system will be able to encode one or more bits per symbol using a reduced frequency spectrum. Apart from amplitude and frequency, the information may also be encoded in the phase of the carrier, in the polarization of the carrier, as variations in pulse-width or as variations in pulse position, etc.

It will be further appreciated that the additional signal processing, such as forward error correction (FEC), may be performed in the information before transmission as an optical signal. In various embodiments, error correction and/or testers may be used to provide feedback to control various transmitters and receivers in the system 10.

In various embodiments, the signal may be encoded by one or more simultaneous AM and/or FM devices, such as frequency chirped lasers, directly modulated laser (DML), externally modulated laser (EML), vertical cavity surface emitting laser (VCSEL), etc. Both DMLs and VCSELs have a broad linewidth and are generally low cost. In various embodiments, pure AM may be used for signal modulation through the use an external modulator with a wide variety of lasers, as are known in the art.

Regardless of how the AM and/or FM signal is generated, the frequency modulation is responsible for the different states are converted to different frequencies, whereas the amplitude modulation is responsible for separating the different states in amplitude, thereby conveniently supplying further information of the different states as conventional systems do not include.

The different frequencies, i.e., the different states, are separated by a frequency separation, also called a FM shift. Thus, the FM shift is defined as the frequency separation between the two states of the frequency modulated (FM) signal. As an example, the FM shift is the difference between the "0"-states and the "1"-state of the combined AM-FM signal, i.e., the optical signal.

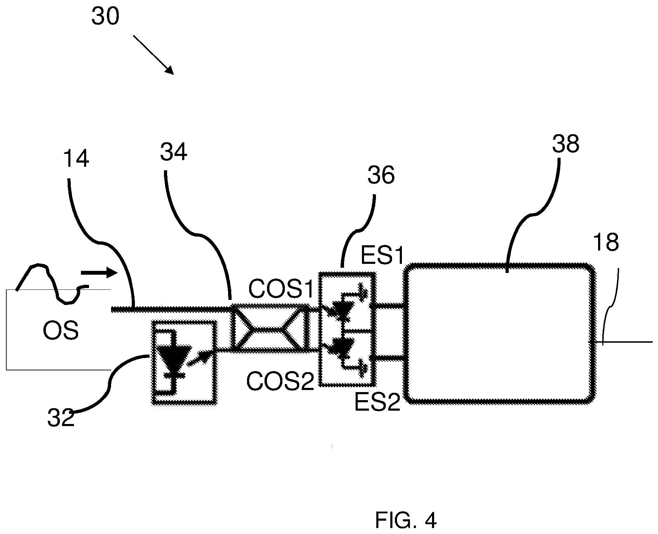

FIG. 4 shows exemplary embodiments of optical receivers 30 that may be employed in the OTRx 24 separate from the optical transmitter or as part of a transceiver. It will be appreciated that other optical receivers in the optical system 10 may be different from the embodiments shown in FIG. 4.

The optical receiver 30 generally may include one or more fixed or tunable local oscillator ("LO") optical sources 32, such as lasers of various linewidths, to provide LO light at one or more local oscillator frequencies, which may offset from the frequency of the optical signal, i.e., the LO frequency offset. The optical local oscillator laser (LO) emitting light at an optical frequency (Flo) which is offset from the signal center frequency (Fc) by frequency-offset, or frequency difference, (dF).

A combiner/splitter 34 combines an incoming optical signal with the LO light and outputs at least two combined optical signals, e.g., COS1 & COS2 to a corresponding number of optical-to-electrical (OE) converters 36, such as photodiodes. For example, a 2x2 PM coupler may be used or separate combiners and splitters. The OE converters 36 output corresponding electrical signals at the frequency of the LO frequency offset, e.g., ES1 & ES2. The corresponding electrical signals may be provided to electrical processing unit 38 that may rectify and output the information as an electrical signal on output line 18 for further signal processing in the receiver and/or further transmission in or out of the system 10.

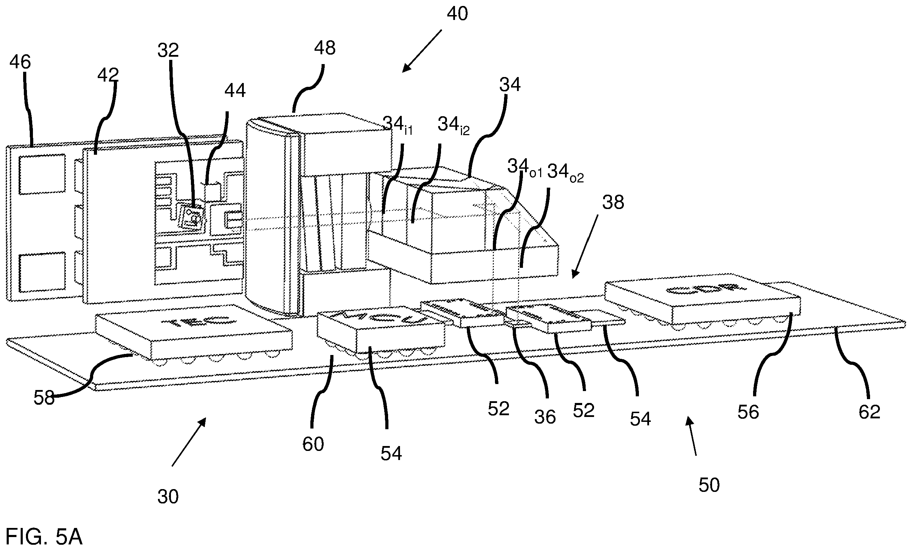

FIGS. 5A-5C shows different perspective views of various optical receiver 30 embodiments of the present invention. The receiver 30 may be a stand-alone device that operates autonomously or a subassembly that operates in conjunction with another optical assemblies. The receiver 30 includes an optical assembly 40 that performs optical processing of the optical signal and an electrical assembly 50 that converts the optical signal to an electrical signal and processes the electrical signal. In order to reduce the physical space occupied by the receiver 30, it may be desirable to package the optical subassembly 40 at a 90 degree angle to the electrical subassembly 50.

The optical assembly 40 may include one or more local oscillator (LO) lasers 32, as well as thermoelectric coolers (TEC) 42, thermistors 44 and monitoring photodiodes 46 that are provided to control the wavelength and power output from the LO laser 32. While multiple LO lasers 32, coolers 42, thermistors 44 and photodiodes 46 may be employed, it may be desirable in various applications to use only one to minimize the space consumed by these components.

The output of the LO laser 32 may be provided to a beam collimator 48 via a beam shaping lens that may include an optical isolator to help protect the LO laser 32. The collimated LO light output from the beam collimator 48 is provided to the input of the optical combiner 34 on a first optical input path 34ᵢ₁ and the optical signal being received is provided to the optical combiner 34 on a second optical path 34ᵢ₂ that is parallel to the first optical path 34ᵢ₁ and in substantially the same plane.

In various embodiments as exemplified in FIGS. 5A-5C, the optical combiner/splitter 34 is a free space beam combining and polarization splitting prism. The optical assembly is configured to allow the prism 34 to receive the local oscillator light and the optical signal via first and second substantially parallel input paths that are in the same plane.

One of ordinary skill will appreciate that descriptors, such as "substantially", "approximately", etc. are generally meant to be inclusive of "exactly", "identically", etc. For example, the invention may operate as intended or is within the scope of the invention, if an angle is not exactly 90 degrees, the light beams are not exactly parallel or coplanar, the LO light is not split 50/50 or oriented at 45 degrees, etc. Embodiments including a deviation may be outside the scope of the invention, if the invention no longer functions when implemented with such a deviation. To that end, one of ordinary skill will further appreciate that it is desirable to assemble the optical subassembly 40 and electrical subassembly 50 in a manner to achieve the relative alignment of components as described herein, which may decrease optical and electrical losses and improve performance.

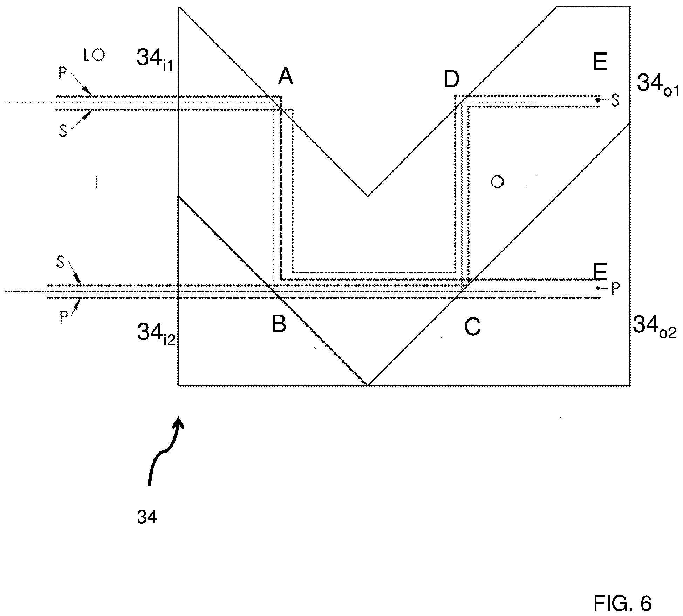

FIG. 6 shows the in-plane interactions of incoming light with the prism 34. The prism 34 may be generally designed with at least two input paths, 34ᵢ₁ and 34ᵢ₂. Light enter the first input path 34ᵢ₁ encounters a reflective surface A and is reflected toward a combining prism surface B. The light on the 1^{st} path 34ᵢ₁ is reflected by surface B and combined with light from the second input path 34ᵢ₂ passing through surface B. The combined light next encounters a polarization splitting surface C in which light in one polarization passes through the surface. Light in the orthogonal state of polarization is reflected by surface C and then reflected by surface D, so as to be traveling in the same direction as the other polarized light beam. Both polarized light beams are reflected substantially 90 degrees out-of-plane from the other reflection and are output from the prism. In various embodiments, output focusing lens may provided between the output paths on the prism 34 and the opto-electrical converters 36 in the electrical assembly 50. The focusing lens may be separate components or integrated on the output surface of the prism 34.

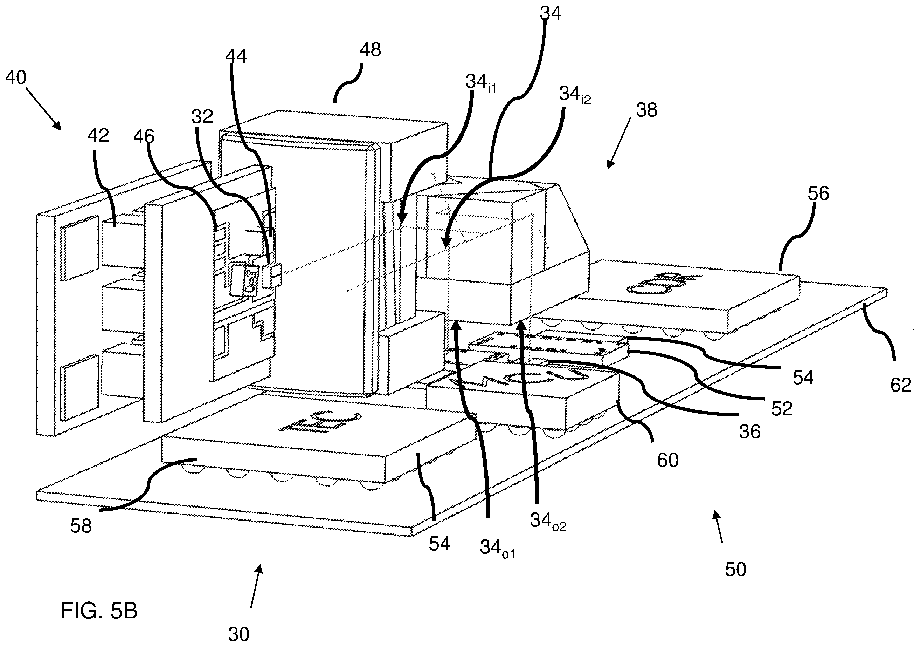

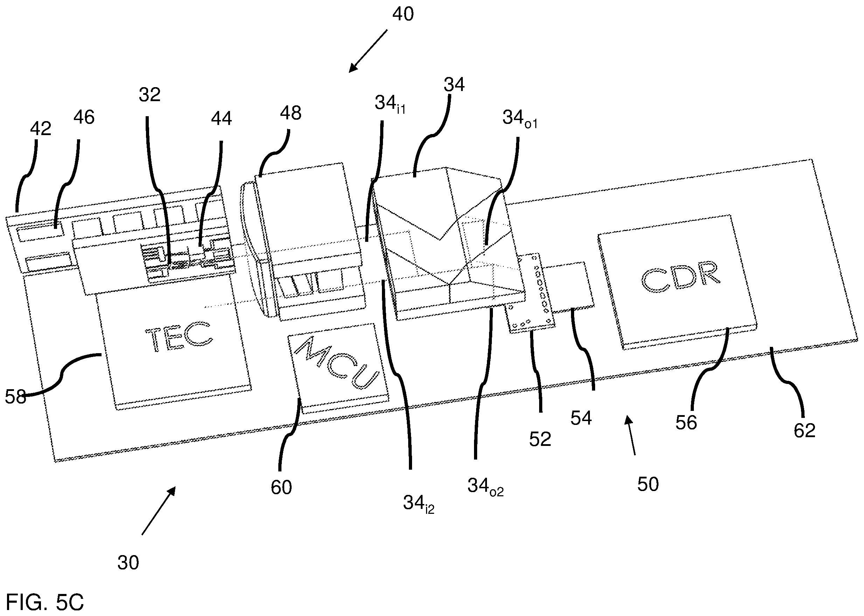

In FIGS. 5 and 6 embodiments, the optical signal being received from the transmitter is depicted as entering or being introduced to the prism via the second input path 34ᵢ₂ with the local oscillator light entering, or being introduced, to the prism 34 via the first optical path 34ᵢ₁. It will be appreciated that while it may be desirable to introduce the optical signal into the second input path 34ᵢ₂, if the reduced number of reduces the loss through the prism 34, other configurations may be employed.

In various embodiments, the local oscillator light input to the prism may be oriented along an approximately 45 degrees angle with respect to the principle axes of the polarizing beam splitter surface of the prism 34 to allow the LO light to be split approximately 50/50 between the two polarization states. The LO light is combined with the optical signal in the prism 34 and the combined LO-optical signal is split into two orthogonally polarized beams that are output via substantially parallel output paths that are also substantially perpendicular to the input paths, and in the same plane as or a parallel plane to, one of the input paths.

The skilled practitioner will appreciate that the LO light does not need to be linearly polarized. For example, circular or elliptical polarized LO light may be employed. Similarly, if LO light is provided to the prism 34 in both polarization states, the align of the LO light at the input has already been addressed.

While the polarization of the local oscillator may be controlled, the polarization of the optical signal is generally not known or controllable in operation. Hence, the optical signal power will be distributed accordingly between the two polarization paths, or arms, depending upon the polarization of the optical signal input into the prism 34. The outputs of the two optical to electrical converters 36 will therefore vary in the same way. When the polarization of the signal is completely aligned along one arm, the optical to electrical converter 36 associated with that arm will have high output around the offset frequency dF between the local oscillator and optical signal frequencies and the other arm will have zero output around dF. When the signal is evenly distributed between the two arms, the optical to electrical converters 36 outputs around dF are equal. By combining the two polarization outputs, the overall system dependence of the polarization of the incoming signal has been reduced.

In various embodiments, the optical to electrical converters 36 may be implemented as photodiodes (PD) including APDs, Flip-chip, etc. to convert the first and second combined optical signals into first and second electrical signals. In various embodiments, the PDs 36 and electrical processing unit 38 have an associated operating bandwidth that may be matched to be approximately equal to or greater than the bandwidth of the incoming optical signal. For example, in various single channel or WDM systems 10, the PD 36 bandwidth and electrical processing unit 38 may be set at 1.5 to 2 times the optical signal bandwidth.

As further shown in FIGS. 5A-5C, the electrical processing unit 38 may include transimpedence amplifiers (TIA) 52 to amplify the electrical signals from the PDs 36 before entering the envelope detectors 54 and passing to a clock and data recovery (CDR) circuit 56. The electrical assembly 50 may also include a TEC controller 58 to control the operation of the TEC 42 and processor 60, such as a microcontroller, and associated memory, communication interfaces, etc. as are known in the art to oversee and control some or all of the functions in the assembly 50 and communicate with other components in a module and/or the system 10. The various electrical components may be mounted on and connected via a printed circuit board or other substrate 62, as well as being connected separate from the board 62.

The alignment of the optical components and the combination of prism surfaces as described above enables a very small form factor for devices of the present invention due to the optical processing of the local oscillator light and optical signal in one plane from one direction and the electrical processing of the signals in a plane perpendicular to the optical processing plane and in one direction. In various embodiments, the optical processing and the electrical processing proceed in the physical same direction. The receiver 30 may be implemented on board with a transmitter assembly to provide a transceiver or may be implemented independently on a line card.

While FIGS. 5A-5C embodiments show the CDR on the board 56, it will be appreciated that the CDR 56 may be implemented on another board as the signal has been received and reconstructed at that point.

The foregoing disclosure provides examples, illustrations and descriptions of the present invention, but is not intended to be exhaustive or to limit the implementations to the precise form disclosed. Modifications and variations are possible in light of the above disclosure or may be acquired from practice of the implementations. These and other variations and modifications of the present invention are possible and contemplated, and it is intended that the foregoing specification and the following claims cover such modifications and variations.

As used herein, the term component is intended to be broadly construed as hardware, firmware, and/or a combination of hardware and software. It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code--it being understood that software and hardware can be designed to implement the systems and/or methods based on the description herein.

Various elements of the system may employ various levels of photonic, electrical, and mechanical integration. Multiple functions may be integrated on one or more modules or line cards being housed in one or more shelves or racks in the system 10.

Hardware processor modules may range, for example, from general-purpose processors and CPUs to field programmable gate arrays (FPGAs) to application specific integrated circuit (ASICs). Software modules (executed on hardware) may be expressed in a variety of software languages (e.g., , computer code), including C, C++, Java^{™}, Javascript, Rust, Go, Scala, Ruby, Visual Basic^{™}, FORTRAN, Haskell, Erlang, and/or other object-oriented, procedural, or other programming language and development tools. Computer code may include micro-code or micro-instructions, machine instructions, such as produced by a compiler, code used to produce a web service, and files containing higher-level instructions that are executed by a computer using an interpreter and employ control signals, encrypted code, and compressed code.

Some implementations are described herein in connection with thresholds. As used herein, satisfying a threshold may refer to a value being greater than the threshold, more than the threshold, higher than the threshold, greater than or equal to the threshold, less than the threshold, fewer than the threshold, lower than the threshold, less than or equal to the threshold, equal to the threshold, etc.

Certain user interfaces have been described herein and/or shown in the figures. A user interface may include a graphical user interface, a non-graphical user interface, a text-based user interface, etc. A user interface may provide information for display. In some implementations, a user may interact with the information, such as by providing input via an input component of a device that provides the user interface for display. In some implementations, a user interface may be configurable by a device and/or a user (e.g., , a user may change the size of the user interface, information provided via the user interface, a position of information provided via the user interface, etc. ). Additionally, or alternatively, a user interface may be pre-configured to a standard configuration, a specific configuration based on a type of device on which the user interface is displayed, and/or a set of configurations based on capabilities and/or specifications associated with a device on which the user interface is displayed.

Even though particular combinations of features are recited in the claims and/or disclosed in the specification, these combinations are not intended to limit the disclosure of possible implementations. In fact, many of these features may be combined in ways not specifically recited in the claims and/or disclosed in the specification.

No element, act, or instruction used herein should be construed as critical or essential unless explicitly described as such. Also, as used herein, the articles "a" and "an" are intended to include one or more items, and may be used interchangeably with "one or more. Furthermore, as used herein, the term "set" is intended to include one or more items, and may be used interchangeably with "one or more. Where only one item is intended, the term "one" or similar language is used. Also, as used herein, the terms "has," "have," "having," or the like are intended to be open-ended terms. Further, the phrase "based on" is intended to mean "based, at least in part, on" unless explicitly stated otherwise.

## Claims

1. An optical receiver (30) comprising:
an optical input configured to receive an optical signal;
at least one local oscillator (32) configured to provide local oscillator light at a local oscillator frequency,
a free space beam combining and polarization splitting prism (34) configured to combine the optical signal with the local oscillator light and split the combined optical signal into first and second combined optical signals having orthogonal polarizations,
two opto-electrical converters (36) configured to convert first and second combined optical signals into first and second electrical signals, and
an electrical combiner (38) configured to combine the first and second electrical signals into an output electrical signal;
where the optical receiver is configured such that
local oscillator light enters the prism (34) via a first optical input at an orientation such that it is combined with the optical signal and subsequently the combined optical signal is split between orthogonal polarizations by the prism (34),
the optical signal enters the prism (34) via a second optical input that is parallel to the first optical input, the first and second optical inputs lying in an input plane,
the local oscillator light and optical signal being combined and split into first and second combined optical signals by the prism (34) in the input plane, and output from the prism (34) in an output plane lying perpendicular to the input plane,
the opto-electrical converters (36) and the electrical combiner (38) being in a plane parallel to the input plane.

2. An optical communication system (10) comprising:
an optical transmitter configured to transmit an optical signal carrying data having a signal bandwidth; and
the optical receiver of claim 1.

3. The system of claim 2 or the receiver of claim 1, further configured such that
the first and second combined optical signals are converted to electrical signal using photodiodes; and
the first and second electrical signals are combined using first and second envelope detectors (54) and a subtractor.

4. The system of claim 2 or the receiver of claim 1, further configured such that the polarization state of the local oscillator light is introduced to the first input path with a polarization that results in an 50/50 power split after the polarization beam splitting surface of the prism (34).

5. The system of claim 2 or the receiver of claim 1, further comprising a beam collimator (48) to collimate the local oscillator light prior to being introduced into the first input path of the prism (34).

6. The system of claim 2 or the receiver of claim 1, further comprising at least one output lens to focus each of the first and second combined signals onto the opto-electrical converters (36).

7. The system of claim 2 or the receiver of claim 1, further comprising an output lens integrated with each of the first and second output paths on the prism (34) to focus the first and second combined signals onto the opto-electrical converters (36).

8. The system of claim 2 or the receiver of claim 1, further comprising
a beam collimator (48) to collimate the local oscillator light prior to being introduced into the first input path of the prism (34);
a lens to focus the local oscillator light onto the beam collimator (48); and,
an optical isolator positioned to prevent reflections from at least the beam collimator (48) from entering the local oscillator (32).

9. A method of receiving an optical signal comprising
providing
at least one local oscillator (32) providing local oscillator light at a local oscillator frequency,
a free space beam combining and polarization splitting prism (34) for combining the optical signal with the local oscillator light and splitting the combined optical signal into first and second combined optical signals having orthogonal polarizations,
two opto-electrical converters (36) for converting first and second combined optical signals into first and second electrical signals, and
an electrical combiner (38) to combine the first and second electrical signals into an output electrical signal;
introducing the local oscillator light into the prism (34) via a first optical input at an orientation such that it is combined with the optical signal and subsequently the combined optical signal is split between orthogonal polarizations by the prism (34);
providing the optical signal to the prism (34) via a second optical input that is parallel to the first optical input, the first and second optical inputs lying in an input plane,
combining the local oscillator light and optical signal into a combined optical signal via the prism (34) in the input plane;
splitting the combined optical signal into first and second combined optical signals having orthogonal polarizations via the prism (34) in the input plane;
outputting the first and second combined optical signals from the prism (34) in an output plane lying perpendicular to the input plane;
converting the first and second combined optical signals into first and second electrical signals;
combining the first and second electrical signals into a combined electrical signal.

10. The method of claim 9, where
the first and second combined optical signals are converted to electrical signal using photodiodes; and
the first and second electrical signals are combined using first and second envelope detectors (54) and a subtractor.

11. The method of claim 9, where the polarization state of the local oscillator light is introduced to the first input path with a polarization that results in an 50/50 power split after the polarization beam splitting surface of the prism (34).

12. The method of claim 9, further comprising a beam collimator (48) to collimate the local oscillator light prior to being introduced into the first input path of the prism (34).

13. The method of claim 9, further comprising at least one output lens to focus each of the first and second combined signals onto the opto-electrical converters (36).

14. The method of claim 9, further comprising an output lens integrated with each of the first and second output paths on the prism (34) to focus the first and second combined signals onto the opto-electrical converters (36).

15. The method of claim 9, further comprising
a beam collimator (48) to collimate the local oscillator light prior to being introduced into the first input path of the prism (34);
a lens to focus the local oscillator light onto the beam collimator (48); and,
an optical isolator positioned to prevent reflections from at least the beam collimator (48) from entering the local oscillator (32).

## Patentansprüche

1. Ein optischer Empfänger (30), der Folgendes umfasst:
einen optischen Eingang, der zum Empfang eines optischen Signals konfiguriert ist;
mindestens einen lokalen Oszillator (32), der so konfiguriert ist, dass er lokales Oszillatorlicht mit einer lokalen Oszillatorfrequenz liefert,
ein Prisma (34) zur Kombination von Strahlen im freien Raum und zur Polarisationsteilung, das so konfiguriert ist, dass es das optische Signal mit dem Licht des lokalen Oszillators kombiniert und das kombinierte optische Signal in ein erstes und ein zweites kombiniertes optisches Signal mit orthogonalen Polarisationen teilt,
zwei optoelektrische Wandler (36), die so konfiguriert sind, dass sie erste und zweite kombinierte optische Signale in erste und zweite elektrische Signale umwandeln, und
einen elektrischen Kombinierer (38), der so konfiguriert ist, dass er die ersten und zweiten elektrischen Signale in ein elektrisches Ausgangssignal kombiniert;
wobei der optische Empfänger so konfiguriert ist, dass
das Licht des lokalen Oszillators in das Prisma (34) über einen ersten optischen Eingang mit einer solchen Orientierung eintritt, dass es mit dem optischen Signal kombiniert wird und anschließend das kombinierte optische Signal zwischen orthogonalen Polarisationen durch das Prisma (34) aufgeteilt wird,
das optische Signal über einen zweiten optischen Eingang, der parallel zum ersten optischen Eingang liegt, in das Prisma (34) eintritt, wobei der erste und der zweite optische Eingang in einer Eingangsebene liegen,
wobei das Licht des lokalen Oszillators und das optische Signal durch das Prisma (34) in der Eingangsebene kombiniert und in ein erstes und ein zweites kombiniertes optisches Signal aufgespalten werden, und vom Prisma (34) in einer senkrecht zur Eingangsebene liegenden Ausgangsebene ausgegeben werden,
die opto-elektrischen Wandler (36) und der elektrische Kombinierer (38) liegen in einer Ebene parallel zur Eingangsebene.

2. Ein optisches Kommunikationssystem (10), das Folgendes umfasst:
einen optischen Sender, der so konfiguriert ist, dass er ein optisches Signal überträgt, das Daten mit einer Signalbandbreite trägt; und
den optischen Empfänger nach Anspruch 1.

3. Das System nach Anspruch 2 oder der Empfänger nach Anspruch 1 ist ferner so konfiguriert, dass
die ersten und zweiten kombinierten optischen Signale in elektrische Signale durch Fotodioden umgewandelt werden; und
die ersten und zweiten elektrischen Signale unter Verwendung von ersten und zweiten Hüllkurvendetektoren (54) und einem Subtrahierer kombiniert werden.

4. Das System nach Anspruch 2 oder der Empfänger nach Anspruch 1, der außerdem so konfiguriert ist, dass
der Polarisationszustand des Lichts des Lokaloszillators in den ersten Eingangsweg mit einer Polarisation eingeführt wird, die zu einer 50/50-Leistungsteilung nach der Polarisationsstrahlteilerfläche des Prismas (34) führt.

5. Das System nach Anspruch 2 oder der Empfänger nach Anspruch 1 umfasst ferner einen Strahlkollimator (48), um das Licht des Lokaloszillators zu kollimieren, bevor es in den ersten Eingangsweg des Prismas (34) eingeführt wird.

6. Das System nach Anspruch 2 oder der Empfänger nach Anspruch 1 umfasst ferner mindestens eine Ausgangslinse, um jedes der ersten und zweiten kombinierten Signale auf die optoelektrischen Wandler (36) zu fokussieren.

7. Das System nach Anspruch 2 oder der Empfänger nach Anspruch 1 umfasst ferner eine Ausgangslinse, die mit jedem der ersten und zweiten Ausgangspfade auf dem Prisma (34) integriert ist, um die ersten und zweiten kombinierten Signale auf die opto-elektrischen Wandler (36) zu fokussieren.

8. Das System nach Anspruch 2 oder der Empfänger nach Anspruch 1 umfasst ferner
einen Strahlkollimator (48), um das Licht des lokalen Oszillators zu kollimieren, bevor es in den ersten Eingangsweg des Prismas (34) eingeführt wird;
eine Linse zum Fokussieren des Lichts des lokalen Oszillators auf den Strahlkollimator (48); und,
einen optischen Isolator, der so angeordnet ist, dass er verhindert, dass Reflexionen von zumindest dem Strahlkollimator (48) in den Lokaloszillator (32) gelangen.

9. Verfahren zum Empfang eines optischen Signals, umfassend Bereitstellung von
mindestens einen lokalen Oszillator (32), der lokales Oszillatorlicht mit einer lokalen Oszillatorfrequenz liefert,
ein Prisma (34) zur Kombination des optischen Signals mit dem Licht des lokalen Oszillators und zur Aufteilung des kombinierten optischen Signals in ein erstes und ein zweites kombiniertes optisches Signal mit orthogonalen Polarisationen,
zwei optoelektrische Wandler (36) zur Umwandlung erster und zweiter kombinierter optischer Signale in erste und zweite elektrische Signale, und
einen elektrischen Kombinierer (38), um das erste und das zweite elektrische Signal zu einem elektrischen Ausgangssignal zu kombinieren;
Einleiten des Lichts des Lokaloszillators in das Prisma (34) über einen ersten optischen Eingang mit einer solchen Ausrichtung, dass es mit dem optischen Signal kombiniert wird und anschließend das kombinierte optische Signal durch das Prisma (34) zwischen orthogonalen Polarisationen aufgeteilt wird;
Zuführen des optischen Signals zu dem Prisma (34) über einen zweiten optischen Eingang, der parallel zu dem ersten optischen Eingang ist, wobei der erste und der zweite optische Eingang in einer Eingangsebene liegen,
Kombinieren des Lichts des lokalen Oszillators und des optischen Signals zu einem kombinierten optischen Signal über das Prisma (34) in der Eingangsebene;
Aufspalten des kombinierten optischen Signals in ein erstes und ein zweites kombiniertes optisches Signal mit orthogonalen Polarisationen über das Prisma (34) in der Eingangsebene;
Ausgeben des ersten und zweiten kombinierten optischen Signals von dem Prisma (34) in einer Ausgangsebene, die senkrecht zu der Eingangsebene liegt;
Umwandeln des ersten und zweiten kombinierten optischen Signals in ein erstes und zweites elektrisches Signal;
Kombinieren des ersten und zweiten elektrischen Signals zu einem kombinierten elektrischen Signal.

10. Verfahren nach Anspruch 9, wobei
das erste und zweite kombinierte optische Signal in ein elektrisches Signal durch Fotodioden umgewandelt werden; und
das erste und das zweite elektrische Signal unter Verwendung eines ersten und eines zweiten Hüllkurvendetektors (54) und einem Subtrahierer kombiniert werden.

11. Verfahren nach Anspruch 9, wobei der Polarisationszustand des Lichts des Lokaloszillators in den ersten Eingangsweg mit einer Polarisation eingeführt wird, die zu einer 50/50-Leistungsteilung nach der Polarisationsstrahlteilerfläche des Prismas (34) führt.

12. Verfahren nach Anspruch 9, das ferner einen Strahlkollimator (48) umfasst, um das Licht des Lokaloszillators zu kollimieren, bevor es in den ersten Eingangsweg des Prismas (34) eingeführt wird.

13. Verfahren nach Anspruch 9, das ferner mindestens eine Ausgangslinse umfasst, um jedes der ersten und zweiten kombinierten Signale auf die optoelektrischen Wandler (36) zu fokussieren.

14. Verfahren nach Anspruch 9, das ferner eine Ausgangslinse umfasst, die mit jedem der ersten und zweiten Ausgangspfade auf dem Prisma (34) integriert ist, um die ersten und zweiten kombinierten Signale auf die optoelektrischen Wandler (36) zu fokussieren.

15. Das Verfahren nach Anspruch 9 umfasst ferner
einen Strahlkollimator (48), um das Licht des lokalen Oszillators zu kollimieren, bevor es in den ersten Eingangsweg des Prismas (34) eingeführt wird;
eine Linse zum Fokussieren des Lichts des lokalen Oszillators auf den Strahlkollimator (48); und,
einen optischen Isolator, der so angeordnet ist, dass er verhindert, dass Reflexionen von zumindest dem Strahlkollimator (48) in den Lokaloszillator (32) eindringen.

## Revendications

1. Récepteur optique (30) comprenant
une entrée optique configurée pour recevoir un signal optique ;
au moins un oscillateur local (32) configuré pour fournir une lumière d'oscillateur local à une fréquence d'oscillateur local,
un prisme de combinaison de faisceaux et de division de polarisation en espace libre (34) configuré pour combiner le signal optique avec la lumière de l'oscillateur local et diviser le signal optique combiné en un premier et un second signaux optiques combinés ayant des polarisations orthogonales,
deux convertisseurs opto-électriques (36) configurés pour convertir les premier et deuxième signaux optiques combinés en premier et deuxième signaux électriques, et
un combineur électrique (38) configuré pour combiner les premiers et seconds signaux électriques en un signal électrique de sortie ;
le récepteur optique est configuré de manière à ce que
la lumière de l'oscillateur local pénètre dans le prisme (34) par une première entrée optique à une orientation telle qu'elle est combinée avec le signal optique et que le signal optique combiné est ensuite divisé entre les polarisations orthogonales par le prisme (34),
le signal optique pénètre dans le prisme (34) par une deuxième entrée optique parallèle à la première entrée optique, la première et la deuxième entrées optiques se trouvant dans un plan d'entrée,
la lumière et le signal optique de l'oscillateur local sont combinés et divisés en premier et second signaux optiques combinés par le prisme (34) dans le plan d'entrée, et émis par le prisme (34) dans un plan de sortie perpendiculaire au plan d'entrée,
les convertisseurs opto-électriques (36) et le combinateur électrique (38) étant dans un plan parallèle au plan d'entrée.

2. Système de communication optique (10) comprenant
un émetteur optique configuré pour transmettre un signal optique transportant des données ayant une largeur de bande de signal ; et
le récepteur optique de la revendication 1.

3. Le système de la revendication 2 ou le récepteur de la revendication 1, configuré en outre pour que
les premier et deuxième signaux optiques combinés sont convertis en signaux électriques à l'aide de photodiodes ; et
les premier et deuxième signaux électriques sont combinés à l'aide des premier et deuxième détecteurs d'enveloppe (54) et d'un soustracteur.

4. Le système de la revendication 2 ou le récepteur de la revendication 1, configuré en outre pour que
l'état de polarisation de la lumière de l'oscillateur local est introduit dans le premier chemin d'entrée avec une polarisation qui résulte en une division de puissance 50/50 après la surface de division du faisceau de polarisation du prisme (34).

5. Le système de la revendication 2 ou le récepteur de la revendication 1 comprend en outre un collimateur de faisceau (48) pour collimater la lumière de l'oscillateur local avant qu'elle ne soit introduite dans le premier chemin d'entrée du prisme (34).

6. Le système de la revendication 2 ou le récepteur de la revendication 1, comprenant en outre au moins une lentille de sortie pour focaliser chacun des premier et second signaux combinés sur les convertisseurs opto-électriques (36).

7. Le système de la revendication 2 ou le récepteur de la revendication 1, comprenant en outre une lentille de sortie intégrée à chacune des première et deuxième voies de sortie sur le prisme (34) pour focaliser les premier et deuxième signaux combinés sur les convertisseurs optoélectriques (36).

8. Le système de la revendication 2 ou le récepteur de la revendication 1, comprenant en outre
un collimateur de faisceau (48) pour collimater la lumière de l'oscillateur local avant qu'elle ne soit introduite dans le premier chemin d'entrée du prisme (34) ;
une lentille pour focaliser la lumière de l'oscillateur local sur le collimateur de faisceau (48) ; et,
un isolateur optique positionné pour empêcher les réflexions provenant au moins du collimateur de faisceau (48) d'entrer dans l'oscillateur local (32).

9. Méthode de réception d'un signal optique comprenant
fournir
au moins un oscillateur local (32) fournissant une lumière d'oscillateur local à une fréquence d'oscillateur local,
un prisme de combinaison de faisceaux et de division de la polarisation en espace libre (34) pour combiner le signal optique avec la lumière de l'oscillateur local et diviser le signal optique combiné en un premier et un second signaux optiques combinés ayant des polarisations orthogonales,
deux convertisseurs opto-électriques (36) pour convertir les premier et deuxième signaux optiques combinés en premier et deuxième signaux électriques, et
un combinateur électrique (38) pour combiner les premier et second signaux électriques en un signal électrique de sortie ;
introduire la lumière de l'oscillateur local dans le prisme (34) via une première entrée optique à une orientation telle qu'elle est combinée avec le signal optique et que le signal optique combiné est ensuite divisé entre les polarisations orthogonales par le prisme (34) ;
fournir le signal optique au prisme (34) via une deuxième entrée optique parallèle à la première entrée optique, la première et la deuxième entrées optiques se trouvant dans un plan d'entrée,
combiner la lumière de l'oscillateur local et le signal optique en un signal optique combiné via le prisme (34) dans le plan d'entrée ;
diviser le signal optique combiné en un premier et un second signaux optiques combinés ayant des polarisations orthogonales via le prisme (34) dans le plan d'entrée ;
émettre les premier et second signaux optiques combinés à partir du prisme (34) dans un plan de sortie perpendiculaire au plan d'entrée ;
convertir les premier et deuxième signaux optiques combinés en premier et deuxième signaux électriques ;
combiner les premiers et seconds signaux électriques en un signal électrique combiné.

10. Méthode de la revendication 9, dans laquelle
les premier et second signaux optiques combinés sont convertis en signaux électriques à l'aide de photodiodes ; et
les premier et second signaux électriques sont combinés à l'aide de premier et second détecteurs d'enveloppe (54) et d'un soustracteur.

11. La méthode de la revendication 9, où l'état de polarisation de la lumière de l'oscillateur local est introduit dans le premier chemin d'entrée avec une polarisation qui résulte en une division de puissance 50/50 après la surface de division du faisceau de polarisation du prisme (34).

12. La méthode de la revendication 9, comprenant en outre un collimateur de faisceau (48) pour collimater la lumière de l'oscillateur local avant qu'elle ne soit introduite dans le premier chemin d'entrée du prisme (34).

13. La méthode de la revendication 9, comprenant en outre au moins une lentille de sortie pour focaliser chacun des premier et second signaux combinés sur les convertisseurs opto-électriques (36).

14. La méthode de la revendication 9, comprenant en outre une lentille de sortie intégrée à chacune des première et deuxième voies de sortie sur le prisme (34) pour focaliser les premier et deuxième signaux combinés sur les convertisseurs opto-électriques (36).

15. La méthode de la revendication 9, comprenant en outre
un collimateur de faisceau (48) pour collimater la lumière de l'oscillateur local avant qu'elle ne soit introduite dans le premier chemin d'entrée du prisme (34) ;
une lentille pour focaliser la lumière de l'oscillateur local sur le collimateur de faisceau (48) ; et,
un isolateur optique positionné pour empêcher les réflexions provenant au moins du collimateur de faisceau (48) d'entrer dans l'oscillateur local (32).
